# EUROPÄISCHE PATENTSCHRIFT

(11) **EP 2 088 531 B1**
(45) Veröffentlichungstag und Bekanntmachung des Hinweises auf die Patenterteilung: **08.07.2015**
(21) Anmeldenummer: 09151451.3
(22) Anmeldetag: 27.01.2009
(51) Int. Cl.: G06F 21/34, G06F 21/84, G06F 21/72, G06F 21/64, G06F 21/62

(54) **Verfahren und Vorrichtung zur sicheren mobilen elektronischen Signatur**
Method and device for secure mobile electronic signature
Procédé et dispositif de signature sécurisée électronique mobile sécurisée

(30) Priorität: 01.02.2008 DE 102008007367
(43) Veröffentlichungstag der Anmeldung: 12.08.2009
(73) Patentinhaber: Novosec Ag, 60311 Frankfurt Am Main (DE)
(72) Erfinder: Stohn, Maik, 65830, Kriftel (DE)
(74) Vertreter: 2K Patentanwälte Blasberg Kewitz & Reichel

(56) Entgegenhaltungen:
- EP-A- 1 035 461
- EP-A- 1 054 364
- EP-A- 1 055 989
- WO-A-99/08415
- WO-A-02/091669
- DE-A1- 19 747 603

## Beschreibung

Die Erfindung betrifft eine mobile persönliche Vorrichtung zur sicheren elektronischen Signatur, und ein entsprechendes Verfahren.

### Gebiet der Erfindung

Bei der Kommunikation und insbesondere bei der Geschäftskommunikation ist es oft unerlässlich, die Echtheit einer übermittelten Information und die Identität des Geschäftspartners zu verifizieren. Dies kann mit Hilfe von elektronischen Signaturen geleistet werden. Der Prozess des elektronischen Signierens besteht normalerweise aus drei Teilschritten: der Übertragung der zu signierenden Information, vorzugsweise auf elektronischem Weg, der Anzeige der zu signierenden Information und der Generierung der eigentlichen elektronischen Unterschrift. Dabei muss sicher gestellt werden, dass sich die elektronische Unterschrift genau auf die zu signierende Information bzw. das Dokument bezieht.

Durch den öffentlichen Charakter der vorzugsweise genutzten Kanäle zur Informationsübermittlung ist es nicht auszuschließen, dass übermittelte Daten durch Dritte eingesehen oder sogar manipuliert werden können. Im Allgemeinen wird dies durch Verschlüsselung [1] von sensiblen Daten in öffentlichen Netzen gelöst. Dies bietet jedoch nur Sicherheit für den Teil der Informationsübertragung.

Außer bei der Übertragung der Informationen gibt es jedoch weitere Angriffspunkte. Die Systeme, welche zur Darstellung und Entgegennahme von Informationen verwendet werden, wie zum Beispiel Computersysteme oder Terminals, müssen im Allgemeinen als manipulierbar betrachtet werden. Die Existenz von Sicherheitslücken in Betriebssystemen, Viren, Trojaner und Phishing Attacken verdeutlichen dies. Selbst wenn die übertragene Information bei der Übermittlung durch Verschlüsselung vor Manipulation geschützt ist, muss sie dem Benutzer zu einem bestimmten Zeitpunkt unverschlüsselt angezeigt und bearbeitet oder bestätigt werden. So kann es Möglichkeiten zur Manipulation des Vorganges geben, falls das Gerät zur Anzeige oder Emtgegennahme von Informationen (z.B. ein Computer) durch Dritte manipuliert wird. In diesem Fall kann es trotz der Verschlüsselung der übertragenen Informationen dazu kommen, dass die durch das manipulierte System angezeigte Information nicht identisch mit der tatsächlich signierten Information ist. Dies kann zum Beispiel durch sogenannte Trojaner-Programme geschehen, die beim Benutzer den Eindruck erwecken, dass er mit einem Geschäftspartner (zum Beispiel der Bank) kommuniziert, tatsächlich jedoch wird mit/über ein Trojaner-Programm kommuniziert, wodurch der Trojaner entsprechende Informationen wie Passwörter und TAN-Nummern erlangen kann.

Die vorliegende Erfindung bezieht sich auf eine Vorrichtung und ein Verfahren zur sicheren digitalen Signatur. Durch eine neuartige Architektur wird gewährleistet, dass die angezeigte Information auch tatsächlich der signierten Information entspricht. Somit werden Manipulationsversuche im Vergleich zum Stand der Technik wesentlich erschwert.

### Stand der Technik

Obwohl es eine Vielzahl von Anwendungen von elektronischen Signaturen gibt, soll der Stand der Technik am Beispiel der elektronischen Bezahlung von Waren oder Dienstleistungen erläutert werden. Die vorliegende Erfindung deckt diesen Anwendungsbereich ebenfalls ab, ist jedoch nicht auf diesen beschränkt.

Bei der elektronischen Bezahlung muss sich der Nutzer gegenüber dem Kreditinstitut oder einem Service-Provider identifizieren. Danach wird der zu bezahlende Betrag angezeigt und optional andere Informationen angezeigt. Der Nutzer autorisiert den Vorgang mit der Eingabe seiner PIN-Nummer und eventuell einer optionalen Transaktionsnummer (TAN). Bei neueren Architekturen hat der Nutzer eventuell eine elektronische Smart-Card, welche einen elektronischen Schlüssel enthält, der elektronische Botschaften verschlüsseln und somit signieren kann. Oft basieren solche Verfahren auf einer Public-Key-Infrastructure (PKI) [2].

Im Folgenden soll die durch die vorliegende Erfindung gelöste Aufgabe beschrieben werden, indem eine beim aktuellen Stand der Technik theoretisch mögliche Manipulation erläutert wird.

Bei Chipkartenlesegeräten gibt es zur Zeit 4 Sicherheitsklassen, wie sie in Deutschland vom Zentralen Kreditausschuss (ZKA [3]) spezifiziert sind [4]:

| | |
|---|---|
| Sicherheitsklasse 1 | Geräte dieser Klasse haben keine besonderen Sicherheitsmerkmale. Der Kartenleser dient nur als Kontaktiereinheit für die Chipkarte |
| Sicherheitsklasse 2 | Diese Chipkartenleser besitzen eine Tastatur, über die zum Beispiel die PIN fürs Homebanking direkt eingegeben werden kann. Dadurch wird das Ausspähen der PIN (zum Beispiel durch Keylogger oder Trojaner) praktisch ausgeschlossen. |
| Sicherheitsklasse 3 | Zusätzlich zur Tastatur haben diese Geräte ein Display und eine eingebaute "Intelligenz", mit der zum Beispiel auch das Bezahlen mit der Geld-Karte im Internet möglich ist. |
| Sicherheitsklasse 4 | Wie Klasse 3, jedoch verfügt das Terminal über eine eigene Identität, die nicht manipuliert werden kann. Dies wird durch eine zweite Smart-Card gewährleistet, welche in das Terminal eingesetzt ist. |

Weitere Erläuterungen zu den Geräteklassen für Chipkartenlesegeräte finden sich auch unter [5,6]. Hier ist zu lesen, dass bei der Sicherheitsklasse 3 Tastatur und Display, zumindest zeitweise, ausschließlich von der Firmware des Chipkarten Terminals gesteuert werden und keine Möglichkeit für das Mithören von Tastatureingaben durch das angeschlossene Computersystem bestehen. Der Chipkartenleser leitet keine Anforderungen direkt an die Chipkarte weiter, sondern prüft sie zuerst. Genau hier liegt eine Schwachstelle: Alle Chipkartenlesegeräte, welche auf diesem Standard basieren, sind mit einem entsprechenden, einheitlichen Schlüssel für die Firmware steuerbar. Ist dieser bekannt, müssen alle Lesegeräte dieser Klasse als unsicher betrachtet werden.

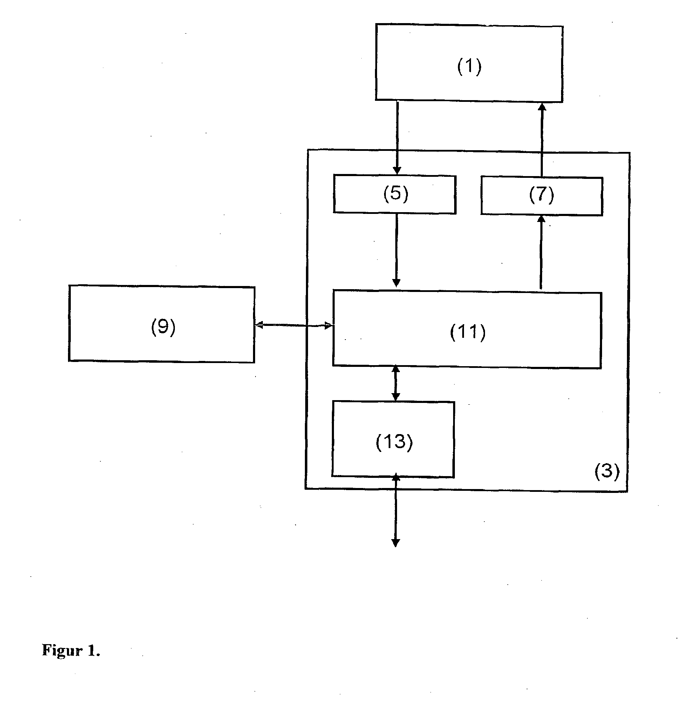

In Figur 1 ist schematisch ein Smartcard Kundenterninal der Sicherheitsklasse 3 zur Illustration des Standes der Technik dargestellt. Der Nutzer 1 kann Informationen vom Display 7 ablesen und Eingaben über die Eingabeeinheit 5 vornehmen, welche eine Tastatur und / oder einen berührungsempfindlichen Bildschirm beinhalten kann. Die Smartcard 9 wird von der Firmware 11 angesteuert. Die Firmware lässt nur solche Zugriffe auf die Smartcard 9 zu, welche mit einem for diese Terminal-Klasse generischen Schlüssel geprüft worden sind. Das Kommunikationsinterface 13 stellt eine Schnittstelle zum Kommunikationspartner (z.B. der Bank) dar. Die Smartcard 9 wird für verschiedene Signaturvorgänge in verschiedene Terminals 3 eingeführt.

Wenn es einem Angreifer gelingt, die Firmware 11 über das Kommunikationsinterface 13 oder durch das Gerät durch physische Modifikation zu manipulieren, können dem Benutzer 1 andere Inhalte angezeigt werden, als er tatsächlich signiert. Da es außerdem eine Vielzahl von baugleichen Terminals mit identischer Firmware und identischen Früfungsalgorithmen gibt, sind bei Kenntnis des Schlüssels für die Firmware durch einen Angreifer alle Terminals dieses Typs als kompromittiert zu betrachten.

Viele Smartcard Lesegeräte bieten außerdem eine Möglichkeit zur Aktualisierung der Firmware bzw. zum Nachladen von Schlüsseln zur Transaktionsprüfung. Dieser Mechanismus selbst bietet ebenfalls die Möglichkeit zur Manipulation.

Zusätzlich verbleibt das Kartenlesegerät in vielen Fällen am Ort der Bezahlung und könnte deshalb ohne das Wissen des Nutzers manipuliert werden. Selbst wenn das Kartenlesegerät im Originalzustand versiegelt ist, kann eine Manipulation vom Benutzer möglicherweise nur schwer erkannt werden.

Eine Manipulation der Firmware und / oder der Hardware des Lesegerätes könnte es somit ermöglichen, dass die im Display angezeigte Information nicht die durch den Nutzer signierte Information ist.

In der Literatur sind verschiedene andere Ansätze für die Lösung dieses Problems beschrieben, die jedoch mit spezifischen Nachteilen behaftet sind. Die Smartcard Terminals der Sicherheitsklasse 4 haben im Allgemeinen eine weitere Smartcard, welche die Identität des jeweiligen Terminals repräsentiert [5]. In diesem Fall ist der Verwaltungsaufwand hoch, da diese Identität zusätzlich zu der des Nutzers verwaltet und registriert werden muss. Weiterhin verbleibt ein solches Terminal beim Händler und könnte deshalb ohne Kenntnis des Nutzers manipuliert werden.

Die Patentanmeldung [7] beschreibt zwar die untrennbare Kombination einer Smartcard mit einem Display, deckt aber vor allem die Integration eines Displays in eine flexible Karte ab und bezieht sich nicht auf Details zur Erhöhung der Sicherheit des Signaturvorganges. In Patentanmeldung [8] zur sicheren Signatur wird nicht offenbart, wie eine Manipulation der Anzeige des Signaturgerätes vermieden werden kann. Die Patentanmeldung [9] beschreibt die Kombination einer Anzeige mit einer Smartcard, wobei die gesamte Einheit im Chipkartenformat ist. Ein angebrachter Schalter wird jedoch nicht zur Signatur, sondern zur Anzeige von gespeicherten Informationen, wie zum Beispiel einem Guthaben, genutzt. In einer weiteren Patentanmeldung [10] wird eine Chipkarte mit integriertem Display und einer Tastatur beschrieben, welche für den Zahlungsverkehr genutzt werden kann. Hier werden jedoch keine Details über die Informationsarchitektur offenbart, mit welcher die Karte vor der Manipulation Dritter geschützt werden soll. In der Pressemitteilung [11] der Fraunhofer Gesellschaft wird eine Architektur vorgestellt, die das Problem der Manipulation des genutzten PC und seiner Peripherie löst. Diese Anordnung ist im Gegensatz zur vorliegenden Erfindung jedoch nicht für den mobilen Einsatz geeignet. In der Patentanmeldung [12] wird ein portables System zur Signatur von Informationen beschrieben. Hier ist der Hauptinhalt jedoch die Kodierung von Informationen in akustische Signale und die Implementierung innerhalb eines Mobilfunkgerätes. In der Schrift [13] wird ebenfalls eine Anordnung und eine Methode zur mobilen Signatur offenbart. Dieses System arbeitet jedoch mit einem Mobiltelefon und unter Nutzung von Telefonnetzen, was eine Einschränkung darstellt. Ein modernes Mobiltelefon ist ein System, welches durch Software manipuliert werden kann; es existieren bereits Viren und Schadprogramme für Mobiltelefone. In diesem Sinne ist ein solches Gerät nicht vertrauenswürdig und ähnlich wie ein PC einzustufen. Die Lösung der Hauptaufgabe der vorliegenden Erfindung, die Garantie der Übereinstimmung von angezeigter und signierter Nachricht, wurde in [13] nicht offenbart.

Die WO 02/091669 A1 zeigt ein Verfahren zum Signieren von Dokumenten, die auf einer Anzeige des Gerätes angezeigt werden, und die zu signieren sind, damit erkannt werden kann, ob die Dokumente modifiziert wurden.

Die EP 1055 989 zeigt einen gehärteten Computer, dessen Display-Prozessor immun gegen nicht autorisierte Modifikationen ist.

Die EP 1 035 461 zeigt ein Verfahren, bei dem Computer, die über eine Schnittstelle verbunden sind, vor dem Einbringen von nicht autorisierter Software gesichert sind. Die WO 99/08415 zeigt eine Vorrichtung zur Erzeugung von gesicherten Unterschriften bei der durch ein externes Gerät diese Unterschriften freizugeben sind, bevor ein Ausdruck erfolgt.

Die EP 1054 364 A2 zeigt ein Verfahren bei dem die Sicherheit bei der Verarbeitung von digitalen Unterschriften erhöht wird. Hierbei wird eine enge Kopplung zwischen Anzeigegerät und Chipkarte vorgenommen, deren Kommunikation durch Signaturen geschützt ist.

### Beschreibung der Erfindung

Aufgabe der vorliegenden Erfindung, ist die Sicherstellung der Übereinstimmung von angezeigter und signierter Nachricht.

Die vorliegende Erfindung bezieht sich auf eine Vorrichtung und ein Verfahren zur sicheren Signatur, realisiert durch ein Gerät zur Autorisierung von Informationen bzw. der Freigabe von Transaktionen, im Folgenden auch Signaturgerät genannt.
Das Signaturgerät enthält eine Smartcard bzw. einen Einschub dafür und ist mit mindestens einem Display ausgestattet. Die Smartcard kann auch als festes und untrennbares Funktionsmodul in das Signaturgerät eingebaut sein.
Ziel der Erfindung ist es, eine Differenz zwischen der angezeigten Information (z.B. Transaktionsinformation) und der tatsächlich signierten Information bei einem Signaturgerät auszuschließen. Dies wird erfindungsgemäß durch eine Kombination von zwei Maßnahmen erreicht:
Erstens wird die Hardware so konstruiert, dass die Anzeige des Gerätes nur Inhalte anzeigt, welche für die jeweilige und individuell verschiedene Nutzer-Identität signiert sind. Dies geschieht dadurch, dass das Signiergerät nur solche Informationen anzeigt, die für die darin eingesetzte Smartcard und somit den spezifischen Nutzer bestimmt sind. Dies kann dadurch gewährleistet werden, dass der Kommunikationspartner des Signaturgerätes (z.B. Kreditinstitut) eine nur von der Smartcard des aktuellen Nutzers zu entschlüsselnde Information sendet, welche dann unter direkter Kontrolle bzw. Mitarbeit der Smartcard auf dem Display angezeigt wird. Es ist ein kennzeichnendes Merkmal der Anordnung, dass das Signiergerät von außen erhaltene Informationen nur genau dann anzeigt, wenn sie durch die Nutzerspezifische Smartcard autorisiert sind.

Diese erste Maßnahme allein reicht noch nicht aus, da hier weiterhin eine Manipulation der Hardware des Signaturgerätes und somit der angezeigten und signierten Information möglich wäre. Deshalb wird sie erfindungsgemäß mit einer zweiten Maßnahme kombiniert: Die Verbindung zwischen Smartcard und Display, welches Transaktionsinformationen anzeigt, wird im Regelfall nicht getrennt und ist unter der Kontrolle des Nutzers. Der Nutzer hat kein Interesse an der Manipulation seiner eigenen Transaktionen. Die Schnittstelle zwischen Smartcard und Display ist nur sehr schwer durch Dritte manipulierbar, da sie im Allgemeinen nicht für den Händler bzw. Verkäufer der Dienstleistung oder andere Dritte zugänglich ist. Erfindungsgemäß bilden Smartcard und Display eine Einheit, welche der Nutzer unter seiner Kontrolle hat und an verschiedenen Orten einsetzen kann. Obwohl die Smantcard zum Beispiel bei der Erstbenutzung in das Signaturgerät eingesetzt wird, verbleibt sie üblicherweise für weitere aufeinanderfolgende Signaturvorgänge gepaart mit dem Signaturgerät.

Sollte es einer dritten Partei trotzdem gelingen, die Schnittstelle zwischen Smartcard und Display zu manipulieren und zusätzlich in den Besitz der PIN-Nummer zu gelangen, dann kann nur ein Missbrauch mit einer einzigen Nutzer-Identität (eine einzige Smartcard) stattfinden. Im Gegendsatz dazu ist beim bisherigen Stand der Technik bei einem stationären Lesegerät beim Händler durch Manipulation einer einzigen Hardware (Display und PIN-Eingabetastatur) die Manipulation von Transaktionen von verschiedenen Nutzer-Identitäten möglich.
Die Ausführung von Signaturaktionen und insbesondere die Anzeige von Transaktionsinformationen kann entsprechend der vorliegenden Erfindung nur dann geschehen, wenn der Kommunikationspartner (z.B. das Kreditinstitut) über den für die spezifische Smartcard gültigen Schlüssel verfügt.
Das Signaturgerät entsprechend der Erfindung enthält mindestens ein Display und eine Smartcard. Zusätzlich kann es eine Eingabemöglichkeit für eine PIN Nummer am Signaturgerät geben. Dies kann in Form einer Tastatur ausgeführt sein oder aber durch einen berührungsempfindlichen Bildschirm (touch screen) oder einen Fingerabdruckleser erfolgen. Die PIN Nummer wird mit Hilfe der Smartcard verifiziert. Die Eingabe der PIN Nummer kann ebenfalls über Hardwarekomponenten eines angeschlossenen Host-Systems (z.B. ein PC) erfolgen. Dieses System muss im Allgemeinen als unsicher betrachtet werden und ein Angriff auf die PIN durch Trojaner-Programme ist theoretisch möglich. Ein solcher Angriff wäre trotzdem nicht erfolgreich, da man zur Ausführung einer Signaturaktion gleichzeitig auch die physisch vorhandene Smartcard benötigt.

### Figurenbeschreibung:

Im Folgenden werden die Figuren kurz beschrieben:
Es zeigt:
Fig. 1 den schematischen Aufbau eines Smartcard Kundenterminals der Sicherheitsklasse 3 zur Illustration des Standes der Technik dargestellt
Fig. 2 Die Struktur eines erfindungsgemäßen Signaturgerätes;
Fig. 3a, 3b zeigen eine Draufsicht und Figur 3b eine Seitenansicht einer Anordnung zur Implementierung der vorliegenden Erfindung;
Die Fig. 4a und 4b zeigen weitere Ausführungsbeispiele.

### Beschreibung der Ausführungsformen:

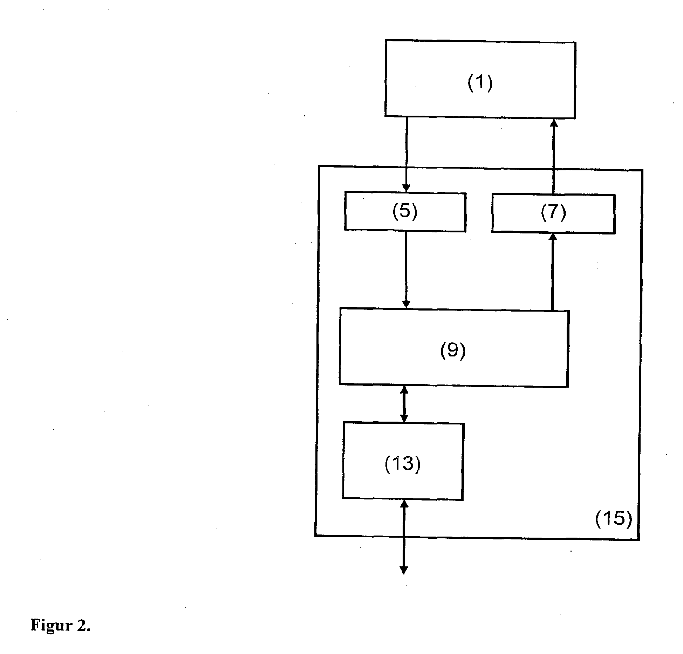

Die Struktur eines erfindungsgemäßen Signaturgerätes ist in Figur 2 illustriert. Die Smartcard 9 ist mit dem Kommunikationsport 13 direkt verbunden und verbleibt üblicher Weise im Signaturgerät 15. Die Architektur ist derart ausgelegt, dass Information auf der Anzeige 7 nur dann dargestellt wird, wenn sie durch die Smartcard 9 mittels einem für den jeweiligen Nutzer spezifischen Schlüssel autorisiert wurde. Eine direkte Manipulation des Displays 7 oder der Eingabeeinheit-5 ohne die Autorisierung durch die Smartcard ist ausgeschlossen.

Ein weiteres Merkmal der erfindungsgemäßen Anordnung ist ein Signaturmechanismus, welcher besonders sicher und gleichzeitig einfach zu bedienen ist. Am Signaturgerät befindet sich ein Knopf als Teil der Eingabeeinheit 5, wobei diese Hardware ausschließlich durch den Benutzer des Signaturgerätes und in keinem Fall jedoch von außen kontrolliert werden kann. Gleichzeitig sollte dieser Knopf konstruktiv derart ausgeführt sein, dass er nicht versehentlich betätigt werden kann. Vorzugsweise hat dieser Knopf immer nur dieselbe Funktion zur Signatur bzw. Freigabe. Wird er betätigt, löst dies die Signatur bzw. Bestätigung der in diesem Moment auf dem Display angezeigten Information durch den Nutzer mit Hilfe seiner Smartcard aus. Kennzeichnend ist dabei, dass die Signaturoperation vorzugsweise mit nur einer einzigen Betätigung ausgelöst wird. In alternativen Ausführungsformen können auch mehrer Knöpfe oder Kombinationen davon gedrückt werden.
Ein Lesegerät der Klasse 2 verfügt zum Beispiel über eine sichere Eingabemöglichkeit für eine PIN, wobei die technische Ausführung derart ist, dass eine Manipulation oder ein Abfangen der Tastatureingaben durch hardwaretechnische Konstruktion ausgeschlossen oder stark erschwert ist. Diese Anordnung entsprechend dem Stand der Technik stellt jedoch einen Nachteil dar, da sich eine Tastatur zur Eingabe einer PIN und Bestätigung nur schwer klein und transportabel bauen lässt. Erfindungsgemäß ist das Vorhandensein eines einzigen, gesicherten und nicht manipulierbaren Hardware-Elementes, wie zum Beispiel eines Knopfes zur Freigabe bzw. zum Signieren ausreichend. Die Eingabe der PIN kann auch auf anderen Eingabegeräten erfolgen, welche eventuell als unsicher angesehen werden müssen. Sollte es einem Trojanerprogramm gelingen, in den Besitz der PIN zu kommen, ist dies nicht ausreichend. Selbst bei Kenntnis und Einspielung der PIN durch ein Trojaner-Programm kann ein Missbrauch nicht stattfinden, da eine Betätigung bzw. Manipulation des Knopfes zur Signatur der angezeigten Nachricht nicht per Software ohne physischen Zugriff auf das Gerät stattfinden kann. Das Weglassen einer kompletten Tastatur zur PIN-Eingabe stellt daher kein erhöhtes Sicherheitsrisiko dar, da ein einziges, physisch nicht manipulierbares Hardware-Element, der Knopf zur Freigabe der Signatur, ausreichend ist. Diese Erkenntnis ermöglicht erfindungsgemäß die Konstruktion von sehr kleinen, portablen und trotzdem sicheren Signaturgeräten. Durch die Miniaturisierung ist eine Mitführung des Signaturgerätes dem Nutzer eher zumutbar und eine Manipulation der Hardware wird aufgrund der Mitführung des Signaturgerätes erschwert.
Weiterhin kann ein Signaturvorgang auch sehr einfach und schnell abgebrochen werden. Falls das Signaturgerät nicht drahtlos Informationen austauscht, kann der Signaturvorgang einfach durch die Terminierung der physikalischen Verbindung (zum Beispiel der Trennung vom USB port) abgebrochen werden. Bei drahtloser Kopplung, welche vorzugsweise durch eine drahtlose Verbindung mit kurzer Reichweite ausgeführt ist, kann der Signaturvorgang entsprechend durch die Entfernung vom dafür vorgesehenen Terminal abgebrochen werden.

Im Folgenden sollen Anordnungen und auch das damit verknüpfte Verfahren entsprechend der Erfindung an Beispielen erläutert werden. Eine mögliche Ausgestaltung der Erfindung ist ein hier beschriebenes, portables Signaturgerät für die Autorisierung von Zahlungsvorgängen oder anderen Transaktionen. Die vorliegende Erfindung ist jedoch nicht auf diese Anwendung beschränkt.

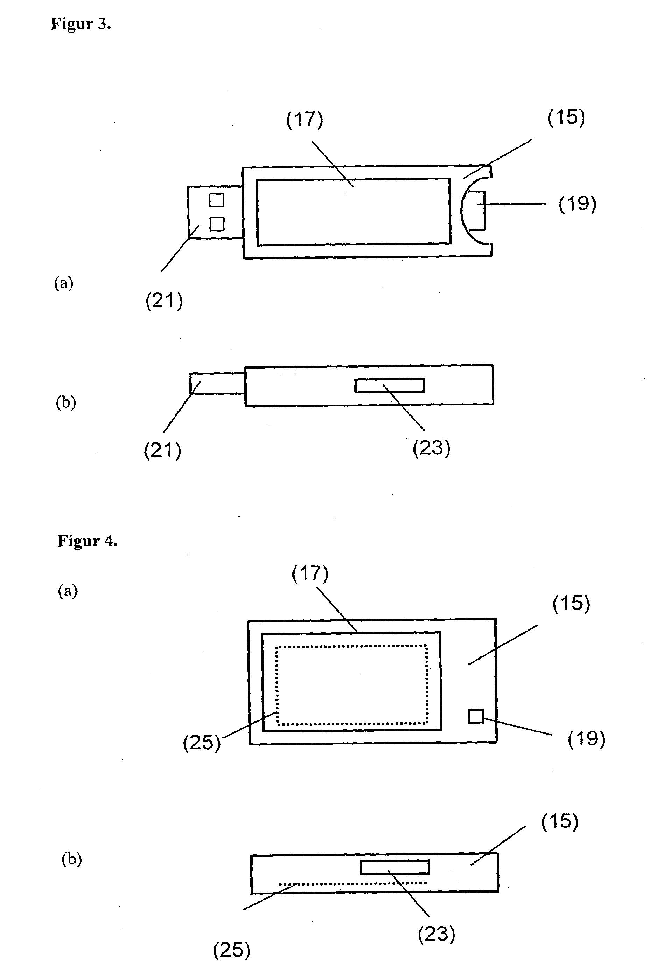

Figur 3a zeigt eine Draufsicht und Figur 3b eine Seitenansicht einer Anordnung zur Implementierung der vorliegenden Erfindung. Das Signaturgerät 15 verfügt über ein Display 17 und über einen Kommunikationsport 21. In diesem Ausführungsbeispiel ist der Kommunikationsport als USB-Interface ausgeführt. Es sind aber auch drahtlose Verbindungen (IRDA, WLAN, Bluetooth, USB-Wireless) oder Kombinationen von kabel gebundenen und drahtlosen Verbindungen möglich. Der Kommunikationsport 21 kann optional von einer Abdeckung geschützt werden, welche in Figur 3 nicht dargestellt ist. In der Seitenansicht in Figur 3b ist die Smartcard 23 sichtbar. Dabei kann es sich um einen Einschub für eine Smartcard, eine bei der ersten Benutzung des Signiergerätes 15 im Inneren desselben installierte Smartcard oder eine fest im Signiergerät angebrachte Smartcard handeln. Wichtig ist, dass die Smartcard zur Einschränkung der Manipulierbarkeit im Alltagsbetrieb im Signiergerät 15 verbleibt.
Das Bedienelement 19 des Signaturgerätes dient zur einfachen Auslösung des Signaturvorganges, wobei durch Drücken dieses vorzugsweise als Taster ausgeführten Bedienelementes die zu diesem Zeitpunkt im Display angezeigte Information mit Hilfe der auf der Smartcard enthaltenen Nutzeridentität signiert wird. Hierbei ist wichtig, dass die Hardware des Bedienelementes 19 nicht von außen per Software manipuliert werden kann sondern eine physische Betätigung notwendig ist. Um dies zu erreichen, ist der Arbeitsspeicher des Gerätes in einer möglichen Ausführungsform schreibgeschützt oder kann in einen Schreibgeschützten Modus geschaltet werden. Für den Signaturvorgang kann eine Public Key Infrastructure [2] entsprechend dem Stand der Technik genutzt werden.
In Figur 3(a) ist eine Gehäuseform in der Nähe des Bedienelementes angedeutet, welches als vorteilhafte Ausgestaltung der vorliegenden Erfindung das versehentliche Betätigen des Bedienelementes unwahrscheinlich macht. In diesem Ausführungsbeispiel sind keine Eingabemöglichkeiten für eine PIN Nummer sichtbar. Diese kann über separate Tasten eingegeben werden, welche über den Kommunikationsport 21 ausgelesen werden können. Alternativ dazu kann die Anzeige 17 auch als berührungsempfindlicher Bildschirm ausgeführt sein, welcher zur Eingabe einer PIN Nummer genutzt werden kann oder zur Erkennung eines Fingerabdrucks.

Ein weiteres Ausführungsbeispiel ist in Figur 4 dargestellt. Figur 4(a) zeigt eine Draufsicht und Figur 4(b) eine Seitenansicht einer Anordnung zur Implementierung der vorliegenden Erfindung. Das Signaturgerät 15 verfügt über eine Anzeige 17, welche vorzugsweise als berührungsempfindlicher Bildschirm implementiert ist und auch zur Eingabe von PIN-Nummern verwendet werden kann. Das Bedienelement 19 löst dabei die Signierung der im Display angezeigten Information aus. Das Gerät kann über eine Induktionsschleife bzw. Antenne 25 mit der Außenwelt gekoppelt werden. Dies ermöglicht den Austausch von Daten und / oder die Versorgung mit Energie. Erfindungsgemäß kann die Signaturoperation durch Auflegen des Signaturgerätes 15 an einer dafür vorgesehenen und vorzugsweise markierten Stelle eingeleitet werden. Dies geschieht durch Kopplung mit einer zweiten Induktionsschleife (nicht dargestellt in Figur 4), welche das Gerät mit Energie und / oder Daten versorgt. Der Nutzer kann eine unerwünschte Signaturoperation jederzeit durch Entnahme des Gerätes bzw. Entkopplung von der Induktionsschleife durch Entfernen des Signaturgerätes vornehmen. Die Funktion des Bedienelementes 19 kann ebenfalls auf der Anzeige 17 implementiert sein, wenn es sich um eine berührungsempfindliche Version handelt. Wie im vorangehenden Beispiel kann die Eingabe einer PIN-Nummer ebenfalls über ein Eingabegerät erfolgen, mit welchem das Signaturgerät über ein Kommunikationsinterface kommuniziert. Auch kann ein Finger Print Sensor verwendet werden, der zusätzlich die Identität erkennt. In der Seitenansicht 4(b) ist die Smartcard 23 sichtbar. Dabei kann es sich um einen Einschub für eine Smartcard, eine bei der ersten Benutzung des Signiergerätes 15 im Inneren desselben installierte Smartcard oder eine fest im Signiergerät angebrachte Smartcard handeln. Auch in diesem Ausführungsbeispiel ist die Architektur des Signaturgerätes 15 derart eingerichtet, dass von der Anzeige 17 nur solche Informationen gezeigt werden, welche von der Smartcard 23 autorisiert bzw. entschlüsselt wurden.

Das Verfahren basiert vorzugsweise auf der og. Vorrichtung. Hierbei wird im ersten Schritt die erfinderische mobile Signaturvorrichtung über die Schnittstelle (z.B. USB) mit einem PC oder einer Registrierkasse verbunden. Letztere sind wiederum mit einem Server verbunden, der in der Regel die Karten- oder Online-Banking Transaktionen entgegennimmt bzw. ausführt. Die erfinderische Vorrichtung wird nun z.B. über den USB-Port mit dem Rechner verbunden. Zusätzlich sind noch Treiber oder Programminformationen auf einem Speicherbereich (der als USB-Festplatte ausgebildet sein kann und durch Autostart gestartet wird) abgelegt, so dass die mobile persönliche Signaturvorrichtung nun von dem PC und / oder dem Server Informationen erhalten bzw. mit diesen austauschen kann. Durch den Autostartansatz können die Treiber bzw. die benötigten Programminformationen automatisch beim Verbinden gestartet werden. Bei einer Registrierkasse erkennt die Kasse anhand des angeschlossenen Gerätes sofort, dass die Signatur über die erfindungsgemäße Vorrichtung zu erfolgen hat und leitet die entsprechende Kommunikation mit dem Server um, falls eine direkte Kommunikation der erfindungsgemäßen Vorrichtung mit dem Server nicht möglich ist. Bei der PC- orientierten Onlinebanking -Variante, erkennt eine Anwendung, die mit einem Internet Browser kommuniziert, dass eine mobile Signaturvorrichtung vorhanden ist. Hierdurch wird nun entweder automatisch die Freigabe der Transaktion über die Signaturvorrichtung gesteuert, ohne dass eine TAN einzugeben ist, oder es wird in einem Dialog eine Auswahl bereitgestellt, so dass der Benutzer entscheiden kann, in welcher Form er die Transaktion freigeben möchte. Dieses Programm kann z.B. ein Java-Applet oder ähnliches sein, das durch das Aufrufen der Internet-Homebanking-Seite geladen wird. Der Benutzer hat nun die die Wahl, ob er mit der Signaturvorrichtung oder mit einer TAN arbeiten möchte. Wird z.B. die Signaturvorrichtung gewählt, so werden die eingegebenen Informationen an den Server übermittelt. Der Server kann die Informationen so verändern, dass sie von der Smartcard entschlüsselbar sind. Das kann durch eine Signatur oder durch eine Verschlüsselung erfolgen.
Die so bearbeiteten und/oder verschlüsselten Informationen werden durch den Server an die mobile persönliche Signaturvorrichtung gesendet. Dies kann direkt oder über den PC erfolgen. So kann z.B. die erfindungsgemäße Vorrichtung über NAT als eigenes Netzwerkgerät die Daten empfangen. Alternativ kann auch der PC die Daten über den installierten Treiber bzw. das durch autorun installierte Programm an die erfindungsgemäße Vorrichtung weiterleiten.
Die Vorrichtung empfängt bzw. bearbeitet die Informationen nur, wenn die Informationen korrekt verschlüsselt sind. Somit kann vermieden werden, dass die Vorrichtung mit ungewollten Informationen behindert bzw. beaufschlagt wird.
Falls die Informationen korrekt verändert/verschlüsselt wurden, werden diese auf dem Display angezeigt und es wird gewartet, bis eine Freigabe durch den Benutzer erfolgt. Hierbei werden die vollständigen Transaktionsinformationen angezeigt. Diese umfassen z.B. den Betrag, das Quellkonto und das Zielkonto.
Nach einer Eingabe durch den Benutzer über die Eingabeeinheit erfolgt ein Signieren der Informationen durch die mobile persönliche Signaturvorrichtung und dann eine Übermittlung an den Server. Hierbei ist zu beachten, dass die Eingabe z.B. nur über eine Taste oder über einen Touchscreen bzw. einen Fingerabdruckleser erfolgen kann.

Die Daten für den Fingerabdruck könnten z.B. in der Chipkarte/Smartcard integriert sein.

Die Steuerung der Vorrichtung ist so ausgebildet, dass die auf dem Display angezeigte Information nicht signiert wird und jegliche Aktionen abgebrochen werden, wenn die Vorrichtung von der Schnittstelle, insbesondere vom USB Port, getrennt wird.

In der bevorzugten Ausführungsform wird eine Verbindung über eine Standard-PC-Schnittstelle (USB, FireWire) oder über ein drahtloses Interface, wie Bluetooth oder WLAN, durchgeführt. Hierbei erfolgt die Stromversorgung durch eine integrierte Batterie, die USB/Fire Wire-Schnittstelle oder per Funk wie z.B. über RFID.

Auch wird der Signaturvorgang durch die Trennung der Energieversorgung abgebrochen, wobei diese Energieversorgung durch direkte elektrische Verbindung oder induktive Kopplung implementiert sein kann, wobei diese Art der Kopplung optional auch zur Übermittlung von Daten genutzt werden kann.

Ferner kann die Eingabe einer PIN Nummer zur Autorisierung des Signaturvorganges nicht Teil des mobilen Signaturgerätes selbst sein, sondern kann auf einem angeschlossenen oder kommunizierenden Gerät stattfindet. Die Freigabe jedoch hat am Gerät selber zu erfolgen.

### Literaturverweise

[1] Steve Burnett, Stephen Paine: "RSA Security's Official Guide to Cryptography", Mcgraw-Hill Professional (2002)
[2] Carlisle Adams, Steve Lloyd:"Understanding Public-Key Infrastructure: Concepts, Standards, Deployment Considerations", Macmillan Technical Publishing (1999)
[3] Zentraler Kreditausschuss http://www.zentraler-kreditausschuss.de
[4] http://de.wikipedia.org/wiki/Chipkarte (Stand 21.11.2007)
[5] Kobil Systems GmbH, Worms. www.kobil.de/index.php?id=135&type=2&L=1 (Stand 21.11.2007)
[6] Initiative Geldkarte e.V. http://www.initiative-geldkarte.de/ www/de/pub/geldkarte initiative/initiative geldkarte/aktuelles/hintergr undtext chipkartenles.php (Stand 22.11.07)
[7] DE10210606, GIESECKE & DEVRIENT GMBH (2003): "Display module credit card/payment card/money payment having display module and chip module with conductor track conjugate contact zones and electronic control chip tracks connected/encapsulated"
[8] WO9908415, Siemens AG (1999), "SYSTEM FOR GENERATING ELECTRONIC SIGNATURES IN ABSOLUTE SECURITY"
[9] DE10221496, GIESECKE & DEVRIENT GMBH (2004), "Datenträger"
[10] DE10008076, FREUDENBERG CARL FA (DE), (2001), "Chipkarte"
[11] Fraunhofer Gesellschaft, Pressemitteilung 2003: " Sicheres Signierterminal nutzt PC-Peripherie", http://idw-online.de/pages/de/news59463 (Stand 23.11.2007)
[12] US2007143622, Isaac Labaton (2007), METHODS AND PORTABLE DEVICE FOR DIGITALLY SIGNING DATA
[13] DE19747603C2 Brokat GmbH, Verfahren zum digitalen Signieren einer Nachricht.

## Patentansprüche

1. Verfahren zur sicheren elektronischen Signatur von Informationen einer Bezahl- oder online Banking Transaktion, die von einem Server stammen, mit einer mobilen persönlichen Signaturvorrichtung (15), wobei die Signaturvorrichtung umfasst:
- mindestens eine Anzeige (7) zur Darstellung der Informationen,
- eine integrierte Smartcard (9) oder ein Verbindungsmittel für eine Smartcard, die so ausgebildet ist, dass die Smartcard dauerhaft aufgenommen wird, wobei die mobile persönliche Vorrichtung Smartcard und Display eine kleine kompakte, portable bauliche Einheit bilden, welche der Nutzer unter seiner Kontrolle hat;
- eine Eingabeeinheit (5) zur Interaktion;
- eine Schnittstelle (13), die eine lösbare Verbindung an unterschiedlichen Orten erlaubt, die so für die Signatur von Informationen an verschiedenen Orten genutzt werden kann, über die die zu signierenden Informationen empfangen werden, und über die die signierten Informationen zurückgesendet werden
- mit einer Steuerung, die so ausgebildet und eingerichtet ist, dass auf der Anzeige nur solche Informationen, anzeigt werden, die von der Smartcard entschlüsselt und somit für eine spezifische Nutzer-ID bestimmt sind, welche durch die Smartcard festgelegt ist, wobei eine Signaturaktion bezogen auf die angezeigte Information eine Eingabe durch die Eingabeeinheit zwingend voraussetzt,
- eine Energieversorgung, die über die Schnittstelle erfolgt oder über eine integrierte Batterie;
**umfassend die Schritte:**
- Verbinden der mobilen persönlichen Signaturvorrichtung über die Schnittstelle mit einem PC oder einer Registrierkasse, die wiederum mit einem Server verbunden sind, so dass die mobile persönlichen Signaturvorrichtung Informationen vom Server erhalten kann
- Eingabe der zu signierenden Informationen der Bezahl- oder Online-Banking Transaktion am PC oder der Registrierkasse ;
- Übermittlung der Informationen zum Server, der die Informationen so verändert, so dass sie von der Smartcard mit der spezifischen Nutzer-ID entschlüsselbar sind
- Senden der verschlüsselten Informationen durch den Server an die mobile persönlichen Signaturvorrichtung;
- Empfang der verschlüsselten Informationen, über den PC oder die Registrierkasse, wenn die Information korrekt verschlüsselt sind;
- Anzeigen der Informationen auf dem Display und Warten auf die Freigabe durch den Benutzer;
- Nach einer Eingabe durch den Benutzer über die Eingabeeinheit Signieren der Informationen zur Freigabe durch die mobile persönliche Signaturvorrichtung und übermitteln an den Server, der die Transaktion ausführt, wenn die Signatur korrekt ist.

2. Das Verfahren nach dem vorhergehenden Verfahrensanspruch, wobei die Schnittstelle mit einem Kommunikationsmittel verbunden wird, das am Ort der Durchführung der Signaturaktion eine direkte oder indirekte Verbindung der genannten Anordnung mit einem Kommunikationskanal, wie zum Beispiel dem Internet, einer Telefonverbindung oder einer Mobilfunkverbindung erlaubt, um so die zu signierenden Informationen von dem Server zu erlangen.

3. Das Verfahren nach einem oder mehreren der vorhergehenden Verfahrensansprüche, wobei die Schnittstelle als verkabelte Standard-PC-Schnittstelle (USB, FireWire) ausgebildet sein kann oder als drahtloses Interface ausgeführt ist, wie Bluetooth oder WLAN.

4. Das Verfahren nach einem oder mehreren der vorhergehenden Verfahrensansprüche, wobei die Eingabeeinheit zur Freigabe der Signatur von auf dem Display angezeigten Informationen fungiert, welches vorzugsweise ein Tastknopf ist und welches eine Signaturoperation bezogen auf den im Display angezeigten Informationen mit nur einer Betätigung auslöst und /oder
wobei die Eingabeeinheit zur Auslösung der Signaturoperation auch mit Hilfe eines Berührungsempfindlichen Bildschirmes implementiert ist,
und/oder
wobei die Eingabeeinheit zur Auslösung der Signaturoperation mit einem Fingerabdruck-Leser versehen ist.

5. Das Verfahren nach einem oder mehreren der vorhergehenden Verfahrensansprüche, wobei die Steuerung so ausgebildet ist, dass die auf dem Display angezeigte Information nicht signiert wird und jegliche Aktionen abgebrochen werden, wenn die Vorrichtung von der Schnittstelle , insbesondere vom USB Port, getrennt wird.
und/ oder wenn durch die Trennung der Energieversorgung abgebrochen wird, wobei diese Energieversorgung durch direkte elektrische Verbindung oder induktive Kopplung implementiert sein kann, wobei diese Art der Kopplung optional auch zur Übermittlung von Daten genutzt werden kann.

6. Das Verfahren nach einem oder mehreren der vorhergehenden Verfahrensansprüche, umfassend einen Datenträgerbereich für ein Programm, das Programm wird bei der Herstellung der Verbindung mit der Schnittstelle gestartet, so das eine Kommunikation mit einem Server über die Schnittstelle durch ein Netzwerk erfolgt, und wobei nur solche Daten vom Server empfangen werden, die von der Smartcard entschlüsselt und somit für eine spezifische Nutzer-ID bestimmt sind, welche durch die Smartcard festgelegt ist,

7. Das Verfahren nach einem oder mehreren der vorhergehenden Verfahrensansprüche, wobei die Schnittstelle und vorzugsweise das Programm, so ausgebildet sind, das eine Kommunikation mit und über einen PC erlaubt und/oder eine Registrierkasse erlaubt wird.
und /oder wobei die Hardwareeinrichtung zur Eingabe einer PIN Nummer zur Autorisierung des Signaturvorganges nicht Teil des mobilen Signaturgerätes selbst sein muss, sondern auf einem angeschlossenen oder kommunizierenden Gerät stattfindet, jedoch die Freigabe am Gerät selber zu erfolgen hat.

## Claims

1. A method for a secure electronic signature of information of a payment or online banking transaction originating from a server, with a mobile personal signature device (15), wherein the signature device is comprising:
- at least one display (7) to display information,
- an integrated smart card (9) or a connecting means for a smart card that is designed in such a way that the smart card is permanently integrated, wherein the personal mobile device, smart card and display form a small, compact, portable modular unit which the user has under his control ;
- an input unit (5) for interaction;
- an interface (13), which allows a detachable connection at different locations, which can be used for the signature of information in different places, over which the information to be signed are received, and over which the signed information is returned;
- with a controller, being configured and adapted to display only information on the displays that are decrypted by the smart card and thus intended for a specific user ID, which is determined by the smart card, a signature action referring to the displayed information obligatory requests an input by the input unit;
- a power supply which is provided via the interface or a built-in battery;
comprising the steps of:
- connecting the mobile personal signature device via the interface with a PC or a cash register, which in turn are connected to a server, so that the mobile personal signature device can receive information from the server;
- inputting the information to be signed of the payment or online banking transaction on the PC or the cash register;
- transmitting of the information to the server, that changes the information in a way so that they can be decrypted by the smart card with the specific user ID;
- sending the encrypted information by the server to the mobile personal signature device;
- receiving of the encrypted information of the PC or the cash register when the information is encrypted correctly;
- displaying the information on the display and waiting for an approval by the user;
- after an input by the user on the input unit signing the information for release by the mobile personal signature device and sending the information to the server that is executing the transaction if the signature is correct.

2. The method according to the preceding method claim, wherein the interface is connected to a communication means which allows a direct or indirect connection of the above device at the location of the execution of the signature operation with with a communication channel such as the Internet, a telephone connection or a cellular connection, so as to obtain the information to be signed from the server.

3. The method according to one or more of the preceding method claims, wherein the interface standard may be configured as a wired PC interface (USB, FireWire) or is configured as a wireless interface, such as Bluetooth or WLAN.

4. The method according to one or more of the preceding method claims, wherein the input unit acts to release the signature of the information displayed on the display, which is preferably a push button and which executes a signature operation with respect to the displayed information on the display with only one actuation
and or
wherein the input unit is implemented to trigger the signature operation with the aid of a touch-sensitive display,
and or
wherein the input unit is provided for triggering the signature operation with a fingerprint reader.

5. The method according to one or more of the preceding method claims, wherein the controller is configured such that the information shown on the display is not signed, and any actions are canceled if the device is removed from of the interface, in particular from the USB port,
and/or when cancelled by removing from the power supply, wherein the power supply can be implemented by direct electrical connection or inductive coupling, wherein later can type of coupling can optionally also be used for transmitting data.

6. The method according to one or more of the preceding method claims, comprising a data carrier area for a program, the program is started when a connection to the interface is established, so that a communication with a server via the interface through a network takes place, and whereas only those data is received by the server which are decrypted by the smart card und thus are intended for a specific user ID, which is determined by the smart card.

7. The method according to one or more of the preceding method claims, wherein the interface, and preferably the program are formed that way, that a communication with or via a PC and/or a cash register is allowed;
and/or wherein the hardware device to enter a PIN number to authorize the signing process does not need to be part of the mobile signature device itself, but takes place on a connected or communicating device, however the approval must be carried out on the device itself.

## Revendications

1. Un procédé de signature sécurisée d'une information de paiement ou relative à une transaction bancaire émanant d'un serveur, avec un dispositif de signature personnelle mobile (15), dans lequel le dispositif de signature comporte :
- au moins un affichage (7) pour afficher une information,
- une carte intelligente intégrée (9) ou des moyens de connexion pour une carte intelligente conçus de manière à ce que la carte intelligente soit intégrée en permanence, dans lequel le dispositif mobile personnel, la carte intelligente et l'affichage forment une unité modulaire, compacte, petite sous le contrôle de l'utilisateur ;
- une unité d'entrée (5) pour interaction ;
- une interface (13), permettant une connexion amovible en différents emplacements, pouvant être utilisé pour la signature de l'information en divers lieux, par lesquels est reçue l'information devant être signée, et par lesquels l'information signée est renvoyée ;
- avec un contrôleur, qui est configuré et adapté pour afficher uniquement de l'information sur les afficheurs qui est décryptée au moyen de la carte intelligente et ainsi à l'attention d'un identifiant utilisateur spécifique ID, qui est déterminé par la carte intelligente, une action de signature référant sur l'information affichée sollicitant obligatoirement une entrée par l'unité d'entrée ;
- une alimentation électrique étant fournie via l'interface ou via une batterie intégrée ; comprenant les étapes :
- connexion du dispositif de signature personnelle mobile via l'interface avec un PC ou un terminal de paiement, lesquels sont à leur tour connectés à un serveur, de telle manière que le dispositif de signature personnelle mobile peut recevoir de l'information du serveur ;
- saisie d'une information devant être signée pour le paiement ou la transaction bancaire en ligne sur le PC ou le terminal de paiement ;
- la transmission de l'information au serveur, lequel modifier l'information de façon à pouvoir être décryptée par la carte intelligente avec l'identifiant ID d'utilisateur spécifique ;
- l'envoi de l'information chiffrée par le serveur vers le dispositif de signature personnelle mobile ;
- la réception de l'information chiffrée du PC ou du terminal de paiement dès lors que l'information est proprement chiffrée ;
- l'affichage de l'information sur l'afficheur et l'attente d'une approbation par l'utilisateur ;
- à la suite d'une saisie de l'utilisateur sur l'unité de saisie pour la signature de l'information devant être libérée par le dispositif de signature personnelle mobile et l'envoi de l'information au serveur qui exécute la transaction lorsque la signature est correcte.

2. Le procédé selon la revendication de procédé précédente, dans lequel l'interface est connectée à des moyens de communications permettant une connexion directe ou indirecte du dispositif ci-dessus à l'emplacement d'exécution de l'opération de signature avec un canal de communication tel que Internet, une connexion téléphonique ou une connexion cellulaire, de façon à obtenir du serveur l'information devant être signée.

3. Le procédé selon l'une ou plusieurs des revendications de procédé précédentes, dans lequel le standard d'interface peut être configuré sous forme d'interface PC cablée (USB, Firewire) ou peut être configurée sous forme d'une interface sans file, telle que Bluetooth ou WLAN.

4. Le procédé selon l'une ou plusieurs des revendications de procédé précédentes, dans lequel l'unité de saisie opère pour libérer la signature de l'information affichée sur l'afficheur, qui est de préférence un bouton poussoir et qui exécute une opération de signature relativement à l'information affichée sur l'afficheur avec uniquement un appui
et/ou
dans lequel l'unité de saisie est implémentée pour lancer l'opération de signature avec l'aide d'un affichage tactile ;
et/ou
dans lequel l'unité de saisie est fournie pour lancier l'opération de signature au moyen d'un lecteur d'empreinte digitale.

5. Le procédé selon l'une ou plusieurs des revendications de procédé précédentes, dans lequel le contrôleur est configuré de façon à ce que l'information montrée sur l'affichage n'est pas signée, et toute action est annulée si le dispositif est enlevé de l'interface, en particulier du port USB,
et/ou dans le cas d'une annulation par enlèvement de l'alimentation électrique, lorsque l'alimentation électrique peut être implémentée par une connexion électrique directe ou par couplage inductif, ce dernier pouvant aussi être optionnellement utilisé pour la transmission de données.

6. Le procédé selon l'une ou plusieurs des revendications de procédé précédentes, comprenant une zone de stockage de données pour un programme, le programme étant démarré lors de l'établissement d'une connexion à l'interface, de telle manière qu'est réalisé, au travers un réseau, un communication avec un serveur via l'interface, et dans lequel seules des données sont reçues du serveur qui sont déchiffrées par la carte à mémoire et être ainsi dédiées à un seul identifiant utilisateur spécifique ID, qui est déterminé par la carte à mémoire.

7. Le procédé selon l'une ou plusieurs des revendications de procédé précédentes, dans lequel l'interface, et de préférence le programme sont formés de façon à ce qu'une communication avec ou via un PC et/ou un terminal de paiement est autorisé ;
et/ou dans lequel le dispositif matériel pour saisir un numéro PIN pour l'autorisation du procédé de signature ne requiert pas être une partie du dispositif de signature mobile lui-même, mais peut être réalisé sur un dispositif connecté ou en communication, mais cependant avec l'approbation exécutée sur le dispositif lui-même.
